# EUROPEAN PATENT APPLICATION

(11) **EP 1 928 099 A1**
(43) Date of publication of application: **04.06.2008**
(21) Application number: 06125275.5
(22) Date of filing: 01.12.2006
(51) Int. Cl.: H04B 1/38, H04B 1/16, G06K 19/07

(54) **Telecommunication wireless device with at least two energy sources**

(71) Applicant: NEC Corporation, Minato-ku Tokyo 108-8001 (JP)
(72) Inventor: Helaine, Hubert, 78570, Andresy (FR)
(74) Representative: Poulin, Gérard

(57) **Abstract**

The invention concerns a telecommunication wireless device comprising a secure element embedding a contactless application, a contactless radio block, a power control block ,and at least a first energy source (6) and a second energy source .

According to the invention, the power control block is susceptible to be connected selectively to the first energy source or to the second energy source so as to supply power to said secure element and/or to said contactless radio block either by means of said first energy source or by means said second energy source.

## Description

### TECHNICAL DOMAIN

The invention concerns a telecommunication wireless device comprising a secure element embedding a contactless application, a contactless radio block, a power control block, and at least a first energy source and a second energy source.

The invention also concerns a method for managing the power supply in a telecommunication wireless device.

### STATE OF PRIOR ART

The telecommunication wireless devices are more and more used for other applications along with the communication purpose.

The implementation of these different applications in the wireless devices lead to a greater power consumption provided by a battery. Avaibility of power cannot be guaranty at any time only by the battery of the device unless increasing considerably the battery size. An important application that the telecommunication wireless devices may support is contactless application. In this case, the telecommunication wireless devices may be used as a reader or as a card emulator in a contactless communication with an external target, or as a NFC device in a peer to peer communication. In case of card emulation appliciation, handset shall guaranty 100% of avaibility of service as a contactless card.

One object of the invention is the optimisation of the power consumption of the power available in the battery when the telecommunication wireless device implements an NFC communication (For Near Field Communication).

### PRESENTATION OF THE INVENTION

The invention provides a telecommunication wireless device comprising a secure element embedding a contactless application, a contactless radio block, a power control block, and at least a first energy source and a second energy source.

According to the invention, the power control block is susceptible to be connected selectively to the first energy source or to the second energy source so as to supply power to said secure element and/or to said contactless radio block either by means of said first energy source or by means said second energy source.

Preferably, the power control block switches from the first (respectively second) energy source to the second (respectively first) energy source according to the voltage level needed by the secure element and/or the Contactless radio block. When the telecommunication wireless device implements an NFC communication application, the first (respectively second) energy source is a battery embedded in said telecommunication wireless device and the second energy source is an external magnetic coupling field generated by a contactless target.

In this case, said power control block is switched from the battery source to the magnetic coupling field source when the level of energy available in the battery is lower than a preset threshold and/or when the telecommunication wireless device is set in a power off mode.

The invention also proposes a method for managing the power supply in a telecommunication wireless device comprising, a secure element embedding a contactless application, a Contactless radio block, a power control block, a Host processor and at least a battery and a second energy source, said method comprising the following steps:
- the power control block determines whether the telecommunication wireless device is in a power on mode, power off mode or in a battery off mode,
- the host processor controls said power control block so as to power the Contactless radio block with and the secure element with a negotiated voltage value during power off mode or battery off mode or to switch from the battery to the second energy source according to the level of energy needed by the secure element and/or the Contactless radio block.

Further, in the method according to the the invention:
- the host processor controls said power control block so as to power the Contactless radio block and the secure element during power on, power off mode or battery off mode according to power mode activation status,
- the host processor controls said Contactless radio block for activating selectively the radio standard within Contactless radio block and within the secure element during power on, power off mode or battery off mode according to radio activation status for each power mode.

### BRIEF DESCRIPTION OF THE FIGURE

The forgoing summary, as well as the following detailed description, will be better understood when read in conjunction with the appended figures in which:
- figure 1 represents a schematic diagram of a telecommunication wireless device according to the invention;
- figure 2 represents a flow chart illustrating the method according to the invention.

### DETAILED PRESENTATION OF PARTICULAR EMBODIMENTS

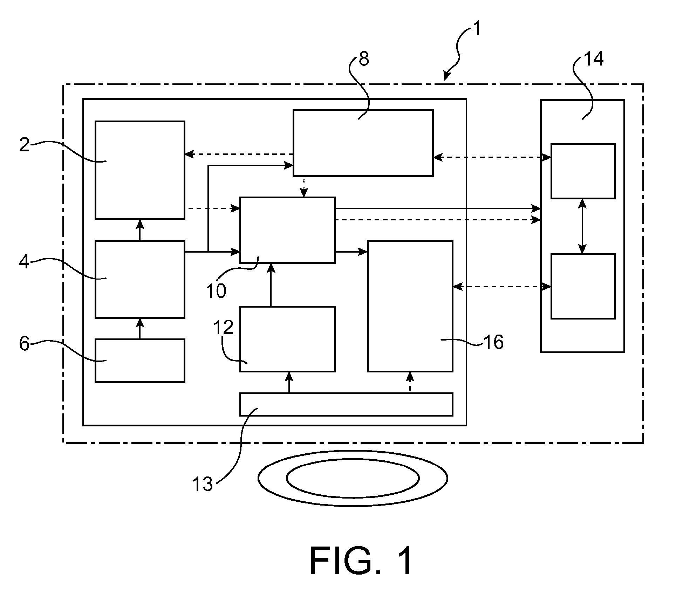

In figure 1, the telecommunication wireless device is a mobile equipment 1 comprising a host processor 2, a standard handset power control 4, a battery 6, a SIM interface voltage adapter 8, an NFC power control 10, an NFC RF energy converter 12, an antenna 13 adapted for converting an external magnetic coupling field generated by a contactless target into electrical power.

The mobile equipment 1 further comprises a secure element 14 embedding a contactless application and contactless radio block 16.

In the preferred embodiment of figure 1, the secure element 14 is a SIM card and the Contactless radio block 16 is adapted for supporting at least one of the following standards, MIFARE^{®}, ISO 14433 A/B, ISO 15693 ISO 18092, FELICA^{®}.

However, the secure element may be either an SD card (Secure Digital Card) or a MMC card (Multimedia Card) for example.

Said secure element 14 and said Contactless radio block 16 are embedded in the handset either in separate chip or in the same chip.

It is to be noted that the mobile equipment 1 may be a PDA, portable computer, or any wireless device without departing from the scope of the invention.

The power control block 10 is susceptible to be connected selectively to the standard handset power control 4 or to NFC RF energy converter 12 so as to power the secure element and/or the contactless radio block by means of a voltage obtained from the battery 6 or by means of a voltage obtained from the converted magnetic power.

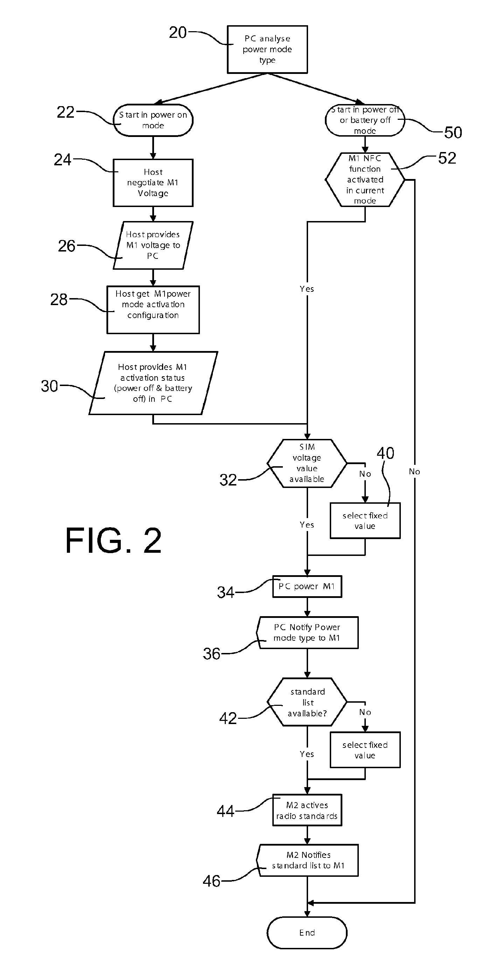

The management of the power supply according to the invention will be explained now by reference to figure 2.

In operation, the mobile equipment 1 may be in three activation mode configurations defined as follows:
- the "power on mode" in which the mobile equipment is "on" and the battery has enough energy for powering either the full handset device, the SIM card 14, and the contactless radio block 16 when call application and contactless application are running in the same time;
- the "power off mode" in which the mobile equipment is "off" and the battery has enough energy for powering at least the SIM card 14 and the contactless radio block 16, and the contactless application is running;
- "battery off mode" in which the mobile equipment is "off", the battery does not have any more energy and the contactless application is running.

The power mode of the mobile equipment 1 is continuously analysed by the handset power control 4 and provided to the NFC power control 10.

At step 20, the NFC power control block 10 analyses the power mode type of the mobile equipment 1.

If the mobile equipment 1 is in power on mode (step 22), at step 24, the host processor 2 negotiates the voltage for powering the SIM card 14 and outputs the negotiated voltage to the power control block at step 26.

At step 28, the host processor 2 gets the SIM card 14 activation mode configuration ("power on mode", "power off mode" or "battery off mode") and radio standard configuration for each mode (MIFARE^{®}, ISO 14433 A/B, ISO 15693 ISO 18092, FELICA^{®}) provides the NFC power control block 10 with the activation mode configuration status "power off", "battery off" at step 30 and provides the contactless Radio block with the activated radio standard list ((MIFARE^{®}, ISO 14433 A/B, ISO 15693 ISO 18092, FELICA^{®}).

The NFC power control block 10 stores the last voltage used for powering the SIM card 14 in power on mode and reuse this value in power off or in battery off mode. If the voltage value is not stored, the SIM card 14 is powered by a predetermined fixed value.

At step 32, the NFC power control block 10 verifies if the SIM voltage value is available.

If so, the NFC power control block 10 powers the SIM card 14 with said voltage value at step 34 and notifies the power mode type to the SIM card 14 at step 36.

Else, the NFC power control block 10 selects a fixed value at step 40 and powers the SIM card 14 with said fixed value at step 34 and notifies the power mode type to the SIM card 14 at step 36.

At step 42, the contactless control block 16 verifies if the activated radio standard list is available.

If so, the contactless control block 16 activates the corresponding standard at step 44 and notifies the activated radio standard list to the SIM card 14 at step 46.

Else, the the contactless control block 16 selects a fixed standard list at step 48 and activates the corresponding standard at step 44 and notifies the activated radio standard list to the SIM card 14 at step 46.

If the mobile equipment 1 is in power off or battery off mode (step 50), at step 52, the host processor 2 verifies if the SIM contactless application is activated in current mode.

If so, the power management is continued from step 32 to 36.

Else, the process management is ended.

In the preferred embodiment of figure 2, the power mode activation configurations data and the activable contactless radio standards list (power mode activation status, ((MIFARE^{®}, ISO 14433 A/B, ISO 15693 ISO 18092, FELICA^{®}) are manufacturing setting that may be modified by the end user or by over the air device management procedure.

However theses configurations may be manufacturing setting that may only be modified by over the air device management procedure.

In another embodiment of the invention, these configurations are fixed manufacturing setting.

In this embodiment, the configurations data may be fixed by hardware.

In the preferred embodiment of the handset device of figure 1, the USIM voltage value is provided through a digital link using a protocol such as UART, SPI, I2C ....

However the USIM voltage value can be provided as a analogic input.

The USIM voltage value may also be provided through input I/O ports configuration without departing from the scope of the invention.

## Claims

1. A telecommunication wireless device (1) comprising a secure element (14) embedding a contactless application, a contactless radio block (16), a power control block (10), and at least a first energy source (6) and a second energy source (7), **characterized in that** said power control block (10) is susceptible to be connected selectively to the first energy source (6) or to the second energy source (7) so as to supply power to said secure element (14) and/or to said contactless radio block (16) either by means of said first energy source (6) or by means said second energy source ( 7 ) .

2. A telecommunication wireless device (1) according to claim 1 wherein said power control block (10) switches from the first (6) (respectively second (7)) energy source to the second (respectively first) energy source according to the voltage level needed by the secure element (14) and/or the Contactless radio block (16).

3. A telecommunication wireless device (1) according to claim 2 wherein the first (6) (respectively second (7)) energy source is a battery embedded in said telecommunication device and the second energy source is an external magnetic coupling field generated by a contactless target.

4. A telecommunication wireless device (1) according to claim 3 wherein said power control block (10) is switched from the battery (6) to the magnetic coupling field (7) when the level of energy available in the battery (6) is lower than a preset threshold and/or when the telecommunication wireless device (1) is set in a power off mode.

5. A telecommunication wireless device (1) according to claim 1 wherein said secure element (14) is a SIM card.

6. A telecommunication wireless device according to claim 1 wherein said secure element (14) is a SD card or a MMC card.

7. A telecommunication wireless device (1) according to claim 1 wherein said Contactless radio block (16) is adapted for supporting at least one of the following standards: MIFARE^{®}, ISO 14433 A/B, ISO 75015693 ISO 18891 or FELICA^{®}.

8. A telecommunication wireless device (1) according to claim 1 wherein said secure element (6) and said Contactless radio block (16) are embedded into the handset in separate chips or in the same chip.

9. Method for managing the power supply in a telecommunication wireless device (1) comprising, a secure element (14) embedding a contactless application, a Contactless radio block (16), a power control block (10), a Host processor (2), at least a battery (6) and a second energy source (7), said method comprising the following steps:
- the power control block (10) determines whether the telecommunication wireless device (1) is in a power on mode, power off mode or in a battery off mode,
- the host processor (2) controls said power control block (10) so as to power the secure element (14) and the Contactless radio block (16) with a negotiated voltage value during power off mode or battery off mode or to switch from the battery (6) to the second energy source (7) according to the level of energy needed by the secure element (14) and/or the Contactless radio block (16).
- the host processor (2) controls said power control block (10) so as to power the the secure element (14) and Contactless radio block (16) during power on, power off mode or battery off mode according to power mode activation status.

10. Method according to claim 9 wherin the host processor (2) controls said Contactless radio block (16) for activating selectively the radio standard within Contactless radio block (16) and within the secure element (14) during power on, power off mode or battery off mode according to radio activation status for each power mode.

11. Method according to claim 10 wherein said second energy source (7) is an external magnetic coupling field generated by a contactless target.
